# EUROPEAN PATENT APPLICATION

(11) **EP 2 000 927 A1**
(43) Date of publication of application: **10.12.2008**
(21) Application number: 08009574.8
(22) Date of filing: 26.05.2008
(51) Int. Cl.: G06F 17/30

(54) **Apparatus and method for abstracting data processing logic in a report**

(30) Priority: 25.05.2007 US 940320 P
(71) Applicant: Business Objects, S.A., 92309 Levallois-Perret (FR)
(72) Inventor: Lawrence, Timothy John, North Vancouver, V7L 1L7 (CA); Tan, Jian Hong, Vancouver, BC V5M 3E8 (CA); White, Brandon Jacob, Pitt Meadows, BC V3B 7X8 (CA); Senecal, Shaun, Vancouver, BC V6Z 3C1 (CA); Tiu, Jonathan Tong Kiong, Delta, BC V4C 7Z1 (CA)
(74) Representative: Müller-Boré & Partner Patentanwälte

(57) **Abstract**

A computer-readable storage medium includes executable instructions to generate a context definition. A query is generated against a data source based on data requirements specified in the context definition. The query is executed against the data source to generate a data source result. The data source result is stored in a report document. A data view for the context definition comprises specific values for the context definition and characterizes the data in the report document. The data view is stored in the report document.

## Description

### CROSS REFERENCE TO RELATED APPLICATIONS

This application claims the benefit of U.S. Provisional Application Serial No. 60/940,320, entitled "Apparatus and Method for Abstracting Data Processing Logic in a Report," filed May 25, 2007, the contents of which are hereby incorporated by reference in their entirety.

### BRIEF DESCRIPTION OF THE INVENTION

This invention relates generally to reporting. More particularly, this invention relates to constructing and using saved data within a report document.

### BACKGROUND OF THE INVENTION

Business Intelligence (BI) generally refers to software tools used to improve business enterprise decision-making. These tools are commonly applied to financial, human resource, marketing, sales, customer and supplier analyses. More specifically, these tools can include: reporting and analysis tools to present information, content delivery infrastructure systems for delivery and management of reports and analytics and data warehousing systems for cleansing and consolidating information from disparate sources. Business Intelligence tools work with data management systems such as relational databases or On Line Analytic Processing (OLAP) systems used to collect, store, and manage raw data.

There are a number of commercially available products to produce reports from stored data. For instance, Business Objects Americas of San Jose, California, an SAP Company, sells a number of widely used report generation products, including Crystal Reports^{™}, Business Objects Voyager^{™}, Business Objects Web Intelligence^{™}, and Business Objects Enterprise^{™}. As used herein, the term report refers to information automatically retrieved (i.e., in response to computer executable instructions) from a data source (e.g., a database, a data warehouse, a plurality of reports, and the like), where the information is structured in accordance with a report schema that specifies the form in which the information should be presented. A non-report is an electronic document that is constructed without the automatic retrieval of information from a data source. Examples of non-report electronic documents include typical business application documents, such as a word processor document, a presentation document, and the like.

A report document specifies how to access data and format it. A report document where the content does not include external data, either saved within the report or accessed live, is a template document for a report rather than a report document. Unlike, other non-report documents that may optionally import external data within a document, a report document by design is primarily a medium for accessing, formatting, transforming and/or presenting external data.

A report is specifically designed to facilitate working with external data sources. In addition to information regarding external data source connection drivers, the report may specify advanced filtering of data, information for combining data from different external data sources, information for updating join structures and relationships in report data, and instructions including logic to support a more complex internal data model (that may include additional constraints, relationships, and metadata).

In contrast to a spreadsheet type application, a report generation tool is generally not limited to a table structure but can support a range of structures, such as sections, cross-tables, synchronized tables, sub-reports, hybrid charts, and the like. A report design tool is designed primarily to support imported external data, whereas a spreadsheet application equally facilitates manually entered data and imported data. In both cases, a spreadsheet application applies a spatial logic that is based on the table cell layout within the spreadsheet in order to interpret data and perform calculations on the data. In contrast, a report design tool is not limited to logic that is based on the display of the data, but rather can interpret the data and perform calculations based on the original (or a redefined) data structure and meaning of the imported data. The report may also interpret the data and perform calculations based on pre-existing relationships between elements of imported data. Spreadsheet applications generally work within a looping calculation model, whereas a report generation tool may support a range of calculation models. Although there may be an overlap in the function of a spreadsheet document and a report document, the applications used to generate these documents contain instructions with express different assumptions concerning the existence of an external data source and different logical approaches to interpreting and manipulating imported data.

Reports are complex documents that may contain subreports or the capacity to drill down or up to different levels of data. Reports often include saved data, but the data is saved without the associated logic that is used to generate this data. Thus, there is limited ability to reuse the saved data. Complex reports may store duplicate data values, but may not be able to reuse data values common between reports and subreports. Similarly, when a report is modified to contain a different subset of the data, the logic of the data values is not available so there are limited options to reuse the common data that is already saved within a report.

In view of the foregoing, it would be advantageous to abstract the logic used to generate data that is saved within a report such that this saved data can be better leveraged.

### SUMMARY OF INVENTION

The invention includes a computer readable storage medium with executable instructions to generate a context definition. A query is generated against a data source based on data requirements specified in the context definition. The query is executed against the data source to generate a data source result. The data source result is stored in a report document. A data view for the context definition comprises specific values for the context definition and characterizes the data in the report document. The data view is stored in the report document.

### BRIEF DESCRIPTION OF THE FIGURES

The invention is more fully appreciated in connection with the following detailed description taken in conjunction with the accompanying drawings, in which:

FIG. 1 illustrates a computer configured in accordance with an embodiment of the invention.

FIG. 2 illustrates the architecture that supports the generation of a basic data processing data source in accordance with an embodiment of the invention.

FIG. 3 illustrates a report with saved data in accordance with an embodiment of the invention.

FIG. 4 illustrates processing operations for generating a basic data processing data source in accordance with an embodiment of the invention.

FIG. 5 illustrates processing operations for generating a data view in accordance with an embodiment of the invention.

FIG. 6 illustrates a work flow in which saved data is reused in accordance with an embodiment of the invention.

FIG. 7 illustrates a work flow in which one of more entities associated with a report are changed and saved data reused in accordance with an embodiment of the invention.

Like reference numerals refer to corresponding parts throughout the several views of the drawings.

### DETAILED DESCRIPTION OF THE INVENTION

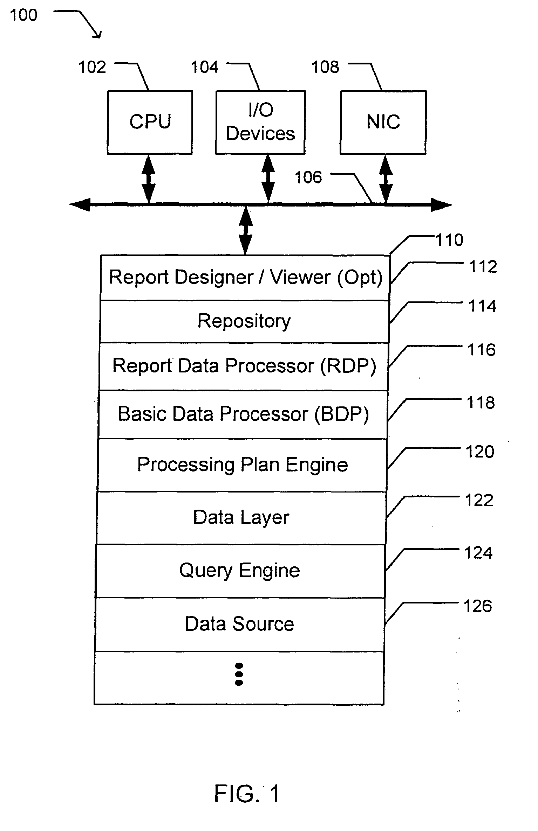

FIG. 1 illustrates a computer 100 configured in accordance with an embodiment of the invention. The computer 100 includes standard components, including a central processing unit 102 and input/output devices 104, which are linked by a bus 106. The input/output devices 104 may include a keyboard, mouse, touch screen, monitor, printer, and the like. A network interface circuit 108 is also connected to the bus 106. The network interface circuit (NIC) 108 provides connectivity to a network (not shown), thereby allowing the computer 100 to operate in a networked environment.

A memory 110 is also connected to the bus 106. In an embodiment, the memory 110 stores one or more of the following modules: an optional report viewer/ designer 112, a repository 114 that may be used to store reports with or without saved data, a Report Data Processor (RDP) 116, a Basic Data Processor (BDP) 118, a processing plan engine 120, a data layer 122, a query engine 124, and a data source 126.

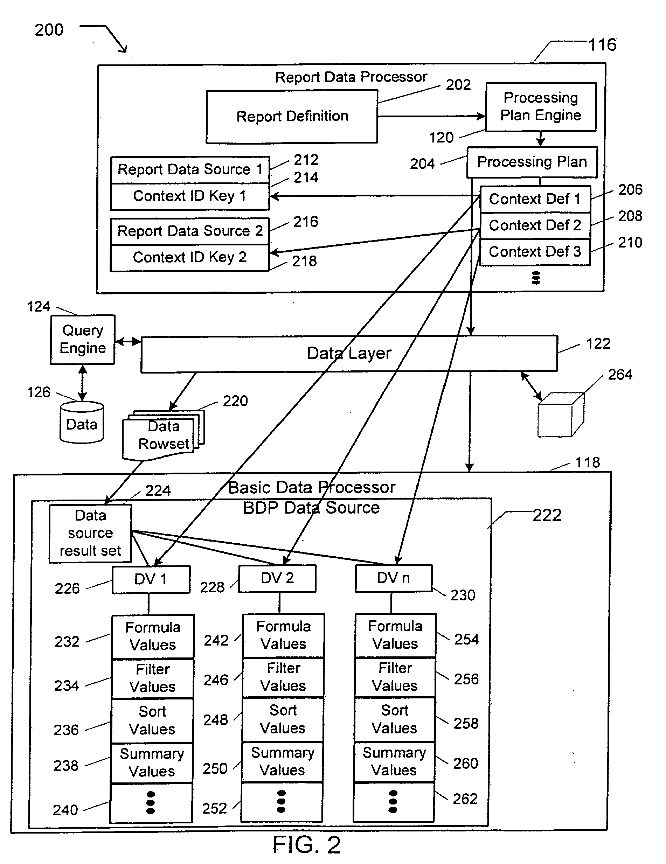

The RDP 116 handles parsing the report definition, and associating context definitions from a processing plan to the report data source definition. In one embodiment, the RDP includes the processing plan engine 120. The processing plan engine 120 generates a processing plan that includes one or more context definitions associated with the processing plan instructions. As shown in FIG. 2, the processing plan engine parses a report definition 202 to determine fields including data source fields, formula fields, summary fields, constant value fields, and grouping logic, sorting logic, and filtering logic. The processing plan 204 combines the requirements of each context definition 206-210 to define the overall processing required to generate a report document based on the report definition.

The context definitions 206-210 defined in the processing plan 204 are used to define context ID keys 214 and 218 respectively associated with report data sources 212 and 216. To populate a report document with data, the report data processor 116 passes the processing plan to the data layer 122. The data layer 122 generates the required query information to pass to the query engine 124. The query engine then queries a specified data source 126 to return the values required by the query information request. In one embodiment of the invention, the query engine 124 translates a generic query request into the appropriate data source specific syntax. Alternatively, the data layer 122 may be used to pass the query directly to a compatible data source such as a semantic layer or another data source 264.

A data source is a source of data. Data sources include sources of data that enable data storage and retrieval. Data sources include databases, such as, relational, transactional, hierarchical, multidimensional (e.g., OLAP), object oriented databases, and the like. Further, data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC) and the like. Data sources also include data sources where the data is not stored like data streams, broadcast data, and the like.

The data layer 122 receives the values from the data source and optionally reformats them and passes a data rowset 220 to the basic data processor 118. The basic data processor 118 generates a basic data processor data source 222 that contains the complete data source result set 224. Based on the one or more context definitions 206-210 defined in the processing plan 204, the basic data processor 118 generates the values associated with the specific data view that is specified by the context definition. The basic data processor 118 works in conjunction with the report data processor to specify the saved values associated with elements in the report document.

The executable modules stored in memory 110 are exemplary. Additional modules such as an operating system or graphical user interface module can be included. It should be appreciated that the functions of the modules may be combined. In addition, the functions of the modules need not be performed on a single machine. Instead, the functions may be distributed across a network, if desired. Indeed, the invention is commonly implemented in a client-server environment with various components being implemented at the client-side and/or the server-side. It is the functions of the invention that are significant, not where they are performed or the specific manner in which they are performed.

FIG. 2 illustrates the architecture that supports the generation of a basic data processing data source in accordance with an embodiment of the invention. The report data processor 116 works with the report definition 202 in order to generate a report that matches the definition that has been defined. This includes working in conjunction with a processing plan engine 120 to produce the processing logic needed to generate the report. In one implementation, the processing plan engine is part of the report data processor 116.

The report definition 202 includes fields. These fields include data fields that define data that is returned from a data source. Constant fields define a fixed value such as report title/heading, author, or a fixed value used in other formula calculations. Formula fields define calculations performed on other values such as data values and constant values. Summary fields define summary calculations such as the total number of employees in a group, total revenue based on individual revenue numbers, or total revenue based on stores with extended hours.

The report definition 202 also specifies logic used to generate data for a report. This logic includes grouping logic, sorting logic, filtering logic, and the like. Grouping logic defines how fields in one or more sections of the report are grouped. A report can group values based on different logical groups such as a group order for country, region, and city or a group order for sales manager, salesperson, city. Different sections of a report can contain different group logic. Sorting defines how items are ordered based on a number of criteria and a report can contain multiple sets of sort logic. For example, sales managers might be sorted based on alphabetical order, salesperson might be sorted based on total sales, and city might be sorted based on revenue. Filter logic defines a subset of the values returned for a query that will be displayed in the report. Filtering logic includes specifying a filter for a report or a portion of a report, allowing a user to redefine the filter logic based on user role authentication, by selecting a new parameter, and the like.

A processing plan 204 is generated by the processing plan engine 120 in order to map the logical requirements to produce a report that matches the report definition 202. The processing plan 204 contains specific logic for each individual context that is defined within the report definition. In one embodiment of the invention, context definitions can be shared between different report data sources. For example, instead of report data source two 216 containing a reference to context ID key two 218, it could contain a reference to context ID key one if the report section or object defined by report data source two contained a subset of that data as defined by the group tree in Data View One (DV1) 226.

The report data sources 212 and 216 contain abstract information about a report's data requirements. For each context definition 206-208 defined within the processing plan 204 there is a report data source 212 and 216 with corresponding context ID keys 214 and 218. The report data source and corresponding context ID act as an abstract reference to the values contained in the data views 226-228. The report data sources 212 and 216 and associated context ID keys 214 and 218 support refreshing the report values when updated data values are provided.

To retrieve or refresh the data associated with a report, the report data processor 116 passes the processing plan 204 which includes the context definitions 206-210 to the data layer 122. Based on the processing plan 204, the data layer 122 generates the required query information to pass to the query engine 124. Not all of the information contained within a processing plan 204 specifies the retrieval of data from a data source. Many of the elements defined in the report definition 202 specify logic or calculations that are either based on data once it has been retrieved or logic that is not dependent on values from the data source. The data layer 122 passes a query information request to the query engine 124. The query engine 124 then queries a specified data source 126 to return the values required by the query information request. In one embodiment of the invention, the query engine 124 translates a generic query request into the appropriate data source specific syntax.

The data layer 122 receives these values and optionally reformats them and passes the data result values 220 also referred to as the data rowset, and the processing plan 204 and associated context definitions 206-210 to the basic data processor 118. The basic data processor 118 generates a basic data processor data source 222 that contains the complete data source result set 224. Based on the context definitions 206-210 defined in the processing plan, the basic data processor generates the values associated with the specific Data View (DV) 226-230 that is specified by the context definition 206-210. Each data view includes values calculated based on the data source result set 224 and the processing plan 204 logic for the specific context definition that it represents. Each data view 226-230 contains extensible logic to define the specific values for this view result from applying the context definition and the processing plan to the data source result set 224. For DV 1 226, formula values 232 would contain the specific values calculated based on the formulas for the context definition 206, filter values 234 would contain the specific values calculated for the context definition 206, sort values 236 would contain the specific sorted values based on the sort logic specified in context definition 1, and summary values 238 would contain the specific summary and grouping values specified by context definition 206. Block 240 indicates further specific categories of values that could be indicated in context definition 206 and specified for DV 1 226. DV 1 226 would reference a single set of data values that reflect the formula, filter, sort, and group and summary operations specified in the context definition and processing plan logic. Similarly, DV2 228 and DV n 230 have specific values reflecting operations 242-252 and 254-262 respectively associated with them in the BDP data source 222.

For example, context definition one 206 might define a report that contains total sales for country, state, and city. The report might contain a formula to specify that the values are for the last complete quarter, a filter to specify that sales are for hardware only, a sort value to show countries and states in alphabetical order, and to show cities based on revenue, and to provide a summary of total sales at each group level (country, state, city). Only the values that matched these criteria would be stored with the data view. Filter logic would be used to limit the results returned from the saved data source result to values associated with hardware sales. Countries and states would then be sorted based on alphabetical order. Context definition two 208, for example, might define a subreport for stores within a city and include both hardware and software sales. Based on these two context definitions, two different data views 226 and 228 would be defined to contain the correct set of data results. Both data views would be based on the same data source result set 224 but would contain different data values.

The basic data processor 118 works in conjunction with the report data processor 116 to specify the saved values associated with elements in the report document.

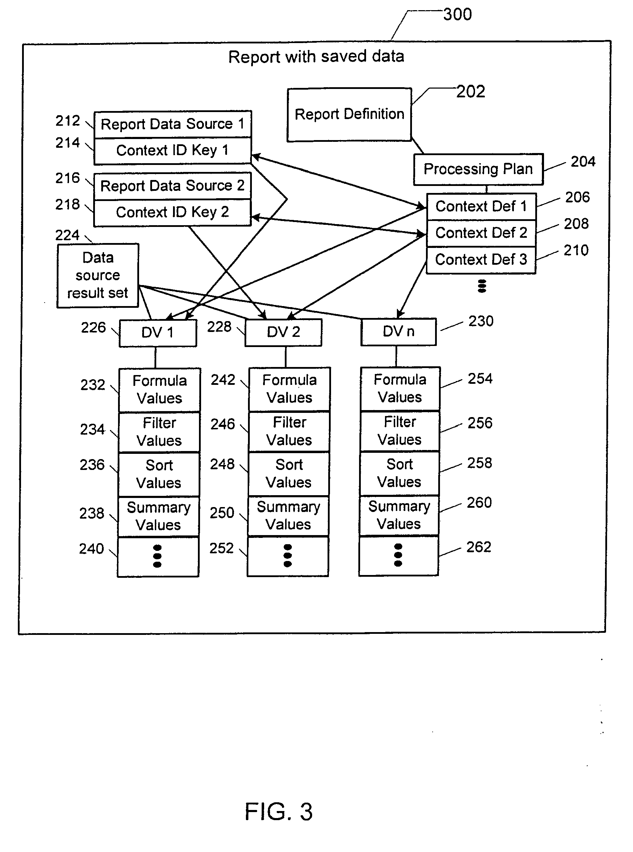

FIG. 3 illustrates a report with saved data 300 in accordance with an embodiment of the invention. This figure separates the elements that are contained within a report with saved data 300 from the elements associated with processing in FIG. 2.

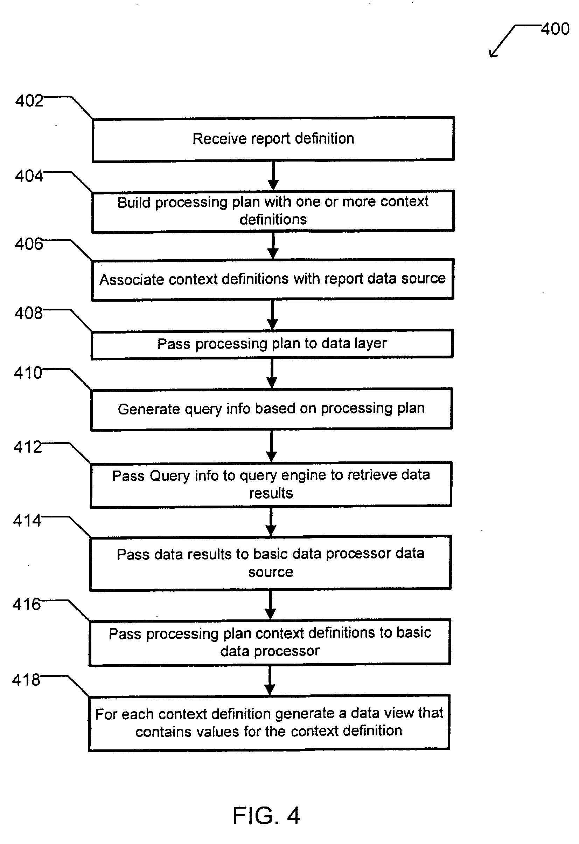

FIG. 4 illustrates processing operations 400 for generating a basic data processing data source in accordance with an embodiment of the invention. A report definition that defines aspects of a report is received 402. A processing plan with one or more context definitions is built 404. This may be performed by the processing plan engine 120 in accordance with an embodiment of the invention. The report definition 202 is parsed to determine fields including data source fields, formula fields, summary fields, constant value fields, grouping logic, sorting logic, and filtering logic. The processing plan includes context definitions for specific sections of or objects in the reports. The processing plan defines the process that needs to be performed to construct a report and populate it with the correct data, constant, and calculated values. Optionally, the RDP 116 associates context definitions with the report data source 406. The RDP 116 passes the processing plan 204 and associated context definitions 206-210 to the data layer 122 for further processing 408. The data layer 122 generates query information based on the information in the processing plan 410. The query information specifies a query to retrieve a result set that provides results to meet the requirements of all of the context definitions. Not all of the information contained within a processing plan 204 specifies the retrieval of data from a data source. Much of the logic specified in the processing plan 204 specifies calculations that are either based on data once it has been retrieved or logic that is not dependent on values from the data source. In one embodiment, filters and sorting that are common between the context definitions are passed down to the data source if the data source handles the calculations.

The query information is passed to the query engine 124 to retrieve data results 412. The data results are passed to the basic data processor 414. In one embodiment, a basic data processor data source 222 is initialized if it is not already existent within the report document. The processing plan context definitions 206-210 are passed to the basic data processor 416. For each context definition 206-210, the basic data processor 118 generates a data view 226-230 that contains data values for the context definition 418.

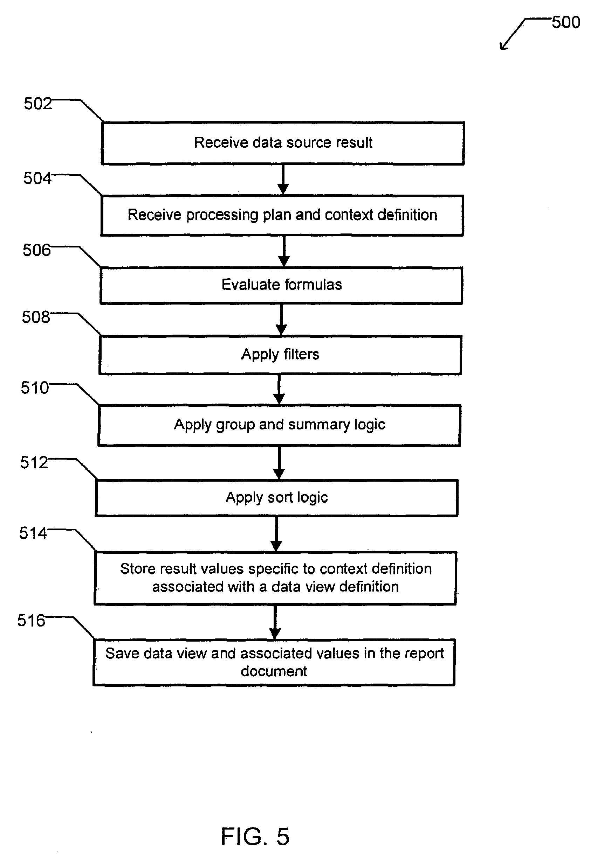

FIG. 5 illustrates processing operations for generating a data view 500 in accordance with an embodiment of the invention. Initially, a data source result is received 502. This occurs when the basic data processor 118 receives the data source result set 224 from the data layer 122. The processing plan and context definitions are received 504 by the basic data processor 118, again passed by the data layer. Based on the processing plan and context definition, the basic data processor 118 will perform a number of operations depending on which operations are specified in the processing plan for the context definition. These potential operations include evaluate formulas 506, apply filters 508, apply group and summary logic 510 and apply sort logic 512. Depending on the context definition and processing plan, one or more of these operations will be performed on the results in the data source result set 224 to create a new set of values specific to the data view. Once the operations specified by the context definition and processing plan have been completed, result values specific to the context definition associated with a data view definition are stored 514. Save the data view and associated values in the report document 516. This saves the specific set of result values for the data view in the report document for future access.

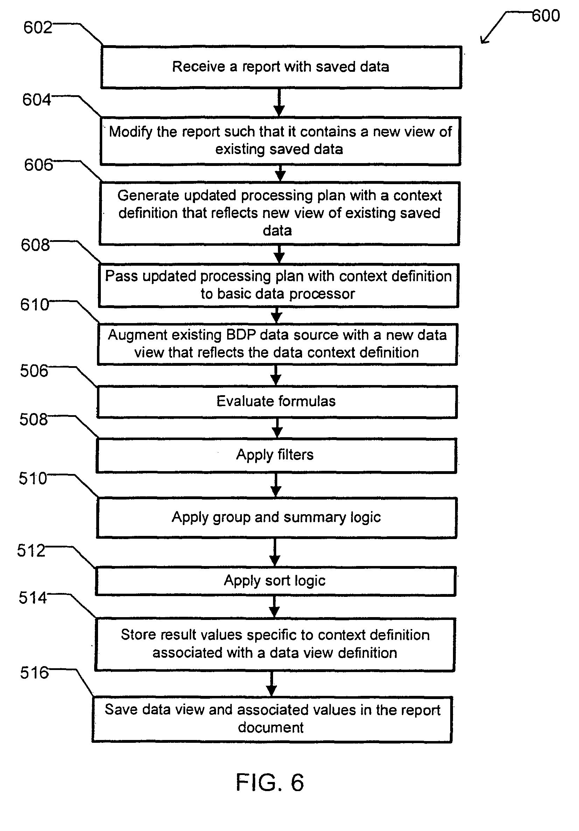

FIG. 6 illustrates a workflow 600 in which saved data is reused in accordance with an embodiment of the invention. A report with saved data is received 602. This provides a report with existing saved data, such as the one illustrated in FIG. 3, to the report data processor 116. Using a report designer or viewer 112 or an automated processing operation, the report may be modified such that it contains a new data view of existing saved data 604. For example, a report that contains international sales data could be modified to display only data for Canadian provinces and to display only salespersons with sales of more than a billion units. Based on the new view of the existing data, an updated processing plan with a context definition that reflects the new view of existing saved data is generated 606. The updated processing plan with the new context definition is passed to the basic data processor 608. The existing BDP data source 222 is augmented with a new data view that reflects the context definition 610. The process to augment the BDP data source with a data view to represent the new data context definition parallels the process in operations 506-516 in FIG. 5 where operations are performed based on the specification of the data context definition and the resulting data values are associated with a data view and stored within the report document. In this way, workflow 600 shows how abstracting the logic used to generate data that is saved with a report document provides improved options for saved data reuse.

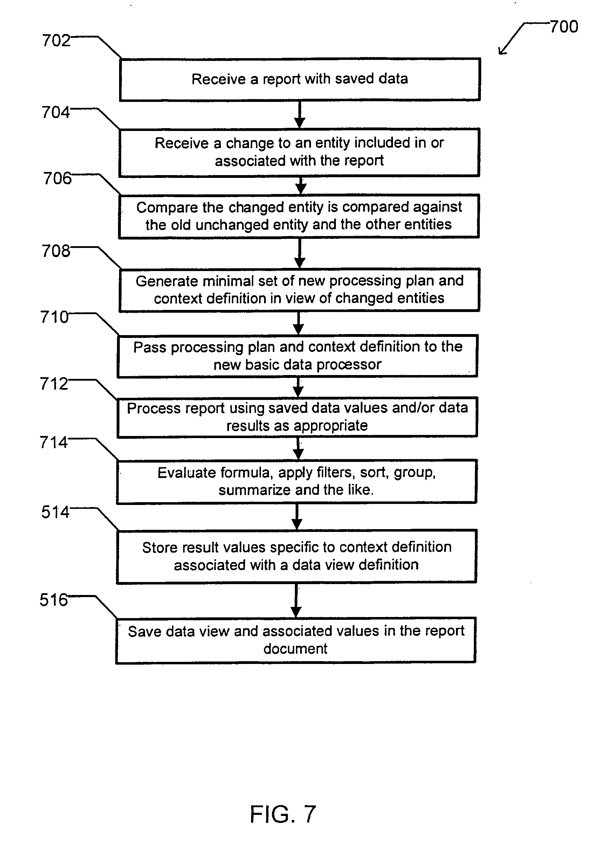

FIG. 7 illustrates a workflow 700 in which one or more entities associated or within a report are reused in accordance with an embodiment of the invention. The one or more entities may include data views, processing plans and context definitions. These one or more entities may be reused along with the result set. A report with saved data in the form a result set is received 702. A report designer, or the like, receives a change to an entity included in or associated with the report 704. In an embodiment, the modification is to one or more of the data view, processing plan and/or context definition. The modified entity is compared against the old unmodified entity and the other entities 706. In the case of multiple modified entities, comparisons are made between the modified and unmodified data views, processing plans and context definitions. Based on the modified entity, new entities are generated as needed 708. For example, if the modified entity is a data view (e.g., a parameter is changed or a sort ordered changed) then the processing plan is changed to create the updated report. Alternatively, if the context definition is changed, specifying a new data source, the processing plan remains the same but new data views and a new result set are needed.

The appropriate processing plan and the context definition are passed to the basic data processor 710. The existing BDP data source 222 is augmented with a new data view that reflects the context definition. The report is processed using saved data values and/or data results as appropriate 712. For example, if that data value has changed but the saved data is still current, the saved data is used. If the data values are still appropriate for reuse they are reused. For example, a sort order is swaped. Finally, a change to the context definition could be made that does not permit even the saved data to be reused, for example, switching from a test to a production data source. The BDP evaluates formula, applies filters, sorts, groups, and summarizes per FIG. 5, 714. Once the operations specified by the context definition and processing plan have been completed, result values specific to the context definition associated with a data view definition are stored 514. The data view and associated values are saved in the report document 516.

Reports constructed in accordance with the foregoing embodiments support many forms of reuse. In one embodiment of the invention, the data stored within a data view is stored in a tree structure based on group and summary conditions in the context definition that defines the data view. By leveraging the tree structure, a report data source can use a context ID key and optionally other contextual information from the report definition, to return a subset of the values in the data view tree of data values. For example, one data view could contain sales values sorted based on country, city and store. This same data view could be used by a top level country report (defined by Report Data Source A, and Context ID Key 12, and contextual information from the report structure/generation) and a drill-down report city report contained within the top level report defined by (Report Data Source B, and Context ID Key 12, and contextual information from the report structure/generation). The top level country report could access the tree structure of the data view values from a top node level or any lower levels, and the drill-down city report could access the data source at a lower node level to obtain city data for the country specified in the top level report. A number of logical optimizations exist for optimizing data view sharing and leveraging the tree structure of the data within the data view values.

An embodiment of the present invention relates to a computer storage product with a computer-readable medium having computer code thereon for performing various computer-implemented operations. The media and computer code may be those specially designed and constructed for the purposes of the present invention, or they may be of the kind well known and available to those having skill in the computer software arts. Examples of computer-readable media include, but are not limited to: magnetic media such as hard disks, floppy disks, and magnetic tape; optical media such as CD-ROMs, DVDs and holographic devices; magneto-optical media; and hardware devices that are specially configured to store and execute program code, such as application-specific integrated circuits ("ASICs"), programmable logic devices ("PLDs") and ROM and RAM devices. Examples of computer code include machine code, such as produced by a compiler, and files containing higher-level code that are executed by a computer using an interpreter. For example, an embodiment of the invention may be implemented using Java, C++, or other object-oriented programming language and development tools. Another embodiment of the invention may be implemented in hardwired circuitry in place of, or in combination with, machine-executable software instructions.

According to an aspect of the application, a computer-readable storage medium may comprise executable instructions to:
receive a report document;
generate a data view for the report document;
generate a processing plan comprising a context definition in accordance with the data view;
generate specific data values for the context definition; and
store the specific data values for the context definition in the report document.

According to an aspect of the application, a computer-readable storage medium may comprise executable instructions to: receive a report document; receive a change to an entity for the report document; generate a changed entity in response to the change; compare the changed entity to its unchanged form; select a processing plan comprising a context definition in accordance with the changed entity; and pass the processing plan to a report processor.

Preferrably, the computer-readable storage medium may further comprise executable instructions to generate a new processing plan in view of the changed entity.

A further embodiment may comprise the computer-readable storage medium, wherein the new processing plan includes a new context definition.

Another embodiment may comprise the computer-readable storage medium, wherein the entity is selected from a data view, a processing plan and a context definition.

Preferrably, the computer-readable storage medium may further comprise executable instructions to generate a new report from a data view stored in the report.

Preferrably, the computer-readable storage medium may comprise executable instructions to generate a new report by retrieving a new result set from a data source specified in the processing plan.

The description of the computer-readable storage medium may apply in similar form to a computer-implemented method.

According to an aspect of the application, a computer-implemented method may comprise the following steps: generating a context definition; generating a query against a data source based on data requirements specified in the context definition; executing the query against the data source to generate a data source result; storing the data source result in a report document; generating a data view for the context definition that comprises specific values for the context definition and characterizes the data in the report document; and storing the data view in the report document.

According to an aspect of the application, a computer-implemented method may comprise the steps of:
receiving a report document;
generating a data view for the report document;
generating a processing plan comprising a context definition in accordance with the data view;
generating specific data values for the context definition; and
storing the specific data values for the context definition in the report document.

According to an aspect of the application, a computer-implemented method may comprise the steps of: receiving a report document; receiving a change to an entity for the report document; generating a changed entity in response to the change; comparing the changed entity to its unchanged form; selecting a processing plan comprising a context definition in accordance with the changed entity; and passing the processing plan to a report processor.

The foregoing description of the computer-readable storage medium and/or the computer implemented method may apply to a computer-program product comprising computer readable instructions, stored on a computer-readable storage medium and/or provided as a data signal, which when loaded and run in a computer system and/or computer network system, cause the computer system and/or the computer network system to perform the steps as descriped in relation with the computer-readable storage medium.

The subject matter described in this application may be implemented as a method and/or as a system and/or using computer program products, tangibly embodied in information carriers, such as a CD-ROM, a DVD-ROM, a semiconductor memory, and/or a hard disk and/or as a computer program product provided as a data signal. Such computer program products may cause a data processing apparatus to conduct one or more operations and/or combination(s) of operations described in this application.

The foregoing description, for purposes of explanation, used specific nomenclature to provide a thorough understanding of the invention. However, it will be apparent to one skilled in the art that specific details are not required in order to practice the invention. Thus, the foregoing descriptions of specific embodiments of the invention are presented for purposes of illustration and description. They are not intended to be exhaustive or to limit the invention to the precise forms disclosed; obviously, many modifications and variations are possible in view of the above teachings. The embodiments were chosen and described in order to best explain the principles of the invention and its practical applications, they thereby enable others skilled in the art to best utilize the invention and various embodiments with various modifications as are suited to the particular use contemplated. It is intended that the following claims and their equivalents define the scope of the invention.

## Claims

1. A computer-readable storage medium, comprising executable instructions to:
generate a context definition;
generate a query against a data source based on data requirements specified in the context definition;
execute the query against the data source to generate a data source result;
store the data source result in a report document;
generate a data view for the context definition that comprises specific values for the context definition and characterizes the data in the report document; and
store the data view in the report document.

2. The computer-readable storage medium of claim 1, further comprising executable instructions to generate a processing plan comprising the context definition.

3. The computer-readable storage medium of claim 2, wherein the processing plan defines a set of logical requirements to generate the report document.

4. The computer readable storage medium according to claim 2 or claim 3, wherein the data source comprises information about the data requirements specified in the processing plan.

5. The computer readable storage medium according to at least one of the preceding claims, wherein each context definition is associated with a corresponding data source and a corresponding context identification key.

6. The computer-readable storage medium according to at least one of the preceding claims, wherein each data view comprises extensible logic that defines the specific values for the data view by applying the context definition and the processing plan to the data source result.

7. The computer-readable storage medium according to at least one of the preceding claims, further comprising executable instructions to perform a plurality of operations specified in the processing plan and the context definition.

8. The computer-readable storage medium according to at least one of the preceding claims, wherein the plurality of operations are performed on the data source result to generate an updated set of specific values for each data viewand / or wherein the plurality of operations are selected from operations to evaluate formulas, apply filters, apply group logic, apply summary logic and apply sort logic to generate the specific values for each context definition.

9. The computer-readable storage medium according to at least one of the preceding claims, further comprising executable instructions to store the specific values for each context definition associated with each data view in the report document.

10. A computer-readable storage medium according to at least one of the preceding claims, comprising executable instructions to:
receive a report document;
generate a data view for the report document;
generate a processing plan comprising a context definition in accordance with the data view;
generate specific data values for the context definition; and
store the specific data values for the context definition in the report document.

11. The computer-readable storage medium of claim 10, further comprising executable instructions to perform a plurality of operations specified in the context definition to generate the specific data values for the context definition.

12. The computer-readable storage medium of claim 10 or 11, further comprising executable instructions to store the data view in the report document.

13. The computer-readable storage medium according to at least one of the claims 10 to 12, wherein logic used to generate the specific data values associated with the report document is saved for later reuse.

14. A computer-readable storage medium according to at least one of the preceding claims, comprising executable instructions to:
receive a report document;
receive a change to an entity for the report document;
generate a changed entity in response to the change;
compare the changed entity to its unchanged form;
select a processing plan comprising a context definition in accordance with the changed entity; and
pass the processing plan to a report processor.

15. A computer-implemented method comprising the following steps:
- generating a context definition;
- generating a query against a data source based on data requirements specified in the context definition;
- executing the query against the data source to generate a data source result;
- storing the data source result in a report document;
- generating a data view for the context definition that comprises specific values for the context definition and characterizes the data in the report document; and
- storing the data view in the report document.
